(19)

Europäisches
Patentamt
European
Patent Office
Office européen
des brevets

(11) **EP 2 234 404 A1**

(12) **EUROPEAN PATENT APPLICATION**
published in accordance with Art. 153(4) EPC

(43) Date of publication:
**29.09.2010 Bulletin 2010/39**

(21) Application number: **09701456.7**

(22) Date of filing: **08.01.2009**

(51) Int Cl.:
***H04N 7/32*** *(2006.01)*

(86) International application number:
**PCT/JP2009/050142**

(87) International publication number:
**WO 2009/088038 (16.07.2009 Gazette 2009/29)**

(84) Designated Contracting States:
**AT BE BG CH CY CZ DE DK EE ES FI FR GB GR
HR HU IE IS IT LI LT LU LV MC MK MT NL NO PL
PT RO SE SI SK TR**
Designated Extension States:
**AL BA RS**

(30) Priority: **09.01.2008 JP 2008002223**

(71) Applicant: **Mitsubishi Electric Corporation
Tokyo 100-8310 (JP)**

(72) Inventors:
• **SEKIGUCHI, Shunichi
Tokyo 100-8310 (JP)**

• **OTOI, Kenji
Tokyo 100-8310 (JP)**
• **IDEHARA, Yuichi
Tokyo 100-8310 (JP)**
• **YAMADA, Yoshihisa
Tokyo 100-8310 (JP)**
• **ASAI, Kohtaro
Tokyo 100-8310 (JP)**
• **MURAKAMI, Tokumichi
Tokyo 100-8310 (JP)**

(74) Representative: **Pfenning, Meinig & Partner GbR
Theresienhöhe 13
80339 München (DE)**

(54) **IMAGE ENCODING DEVICE, IMAGE DECODING DEVICE, IMAGE ENCODING METHOD, AND
IMAGE DECODING METHOD**

(57)    To provide a method of efficiently compressing information by performing improved removal of signal correlations according to statistical and local properties of a video signal in a 4:4:4 format which is to be encoded, an image encoding device for dividing each picture of a digitalvideo signal into predetermined unit regions, and carrying out, for each of the predetermined unit regions, compression encoding using a motion compensation prediction includes: a prediction unit for searching for a motion vector based on virtual-pixel-accuracy specification information for specifying an upper limit of an accuracy of a pixel position indicated by the motion vector, and generating, based on the motion vector that is searched for, amotion-compensation predicted image; and an encoding unit for multiplexing the virtual-pixel-accuracy specification information with a bit stream, and multiplexing, based on a magnitude of the motion vector that is searched for and a magnitude of a motion vector used for prediction of the motion vector that is searched for, motion vector data to be encoded with the bit stream.

## FIG. 1

EP 2 234 404 A1

## Description

Technical Field

The present invention relates to an image encoding device, an image decoding device, an image encoding method, and an image decoding method which are used for a technology of image compression encoding, a technology of transmitting compressed image data, and the like.

Background Art

International standard video encoding methods such as MPEG or ITU-T H.26x mainly use a standardized input signal format referred to as a 4:2:0 format for a signal to be subjected to the compression processing. The 4:2:0 format is a format obtained by transforming a color motion image signal such as an RGB signal into a luminance component (Y) and two color difference components (Cb, Cr), and reducing the number of samples of the color difference components to a half of the number of samples of the luminance component both in the horizontal and vertical directions. The color difference components are low in visibility compared to the luminance component, and hence the international standard video encoding methods such as MPEG-4 AVC/H.264 (hereinbelow, referred to as AVC) (see Non-patent Document 1) are based on the premise that, by applying down-sampling to the color difference components before the encoding, original information content to be encoded is reduced. On the other hand, for contents such as digital cinema, in order to precisely reproduce, upon viewing, the color representation defined upon the production of the contents, a direct encoding method in a 4:4:4 format which, for encoding the color difference components, employs the same number of samples as that of the luminance component without the down-sampling is recommended. As a method suitable for this purpose, there is a standard method as described in Non-patent Document 2. FIG. 9 illustrates a difference between the 4:2:0 format and the 4:4:4 format. In this figure, the 4:2:0 format includes the luminance (Y) signal and the color difference (Cb, Cr) signals, and one sample of the color difference signal corresponds to $2\times2$ samples of the luminance signal while the 4:4:4 format does not specifically limit the color space for expressing the colors to Y, Cb, and Cr, and the sample ratio of the respective color component signals is 1:1.
Non-patent Document 1: MPEG-4 AVC(ISO/IEC 14496-10)/ITU-T H.264 standard
Non-patent Document 2: MPEG-4 AVC(ISO/IEC 14496-10)/ITU-T H.264 Amendment2

Disclosure of the Invention

Problem to be solved by the Invention

For example, in the encoding in the 4:4:4 format described in Non-patent Document 2, as illustrated in FIG. 10, first, input video signals 1001 (in the 4:4:4 format) to be encoded are, in advance, directly or after transformation into signals in an appropriate color space (such as YCbCr space), devided in units of a macroblock (rectangular block of 16 pixels by 16 lines) in a block division unit 1002, and are input, as video signals to be encoded 1003, to a prediction unit 1004. In Non-patent Document 2, the macroblock may be formed of a unit of combined three color components, or may be constructed as a rectangular block of a single color with the respective color components considered as independent pictures, and any one of the structures of the macroblock may be selected in a sequence level. The prediction unit 1004 predicts image signals of the respective color components in the macroblock within a frame and between frames, thereby obtaining prediction error signals 1005. Specifically, in a case of performing the prediction between frames, motion vectors are searched for in units of the macroblock itself or a sub-block obtained by further dividing the macroblock into smaller blocks to generate motion-compensation predicted images based on the motion vectors, and differences are obtained between the video signals to be encoded 1003 and the motion-compensation predicted images to obtain the prediction error signals 1005. A compression unit 1006 applies transform processing such as the discrete cosine transform (DCT) to the prediction error signals 1005 to remove signal correlations, and quantizes resulting signals into compressed data 1007. The compressed data 1007 is encoded through the entropy encoding by a variable-length encoding unit 1008, is output as a bit stream 1009, and is also sent to a local decoding unit 1010, and decoded prediction error signals 1011 are obtained. These signals are respectively added to predicted signals 1012 used for generating the prediction error signals 1005, thereby obtaining decoded signals 1013. The decoded signals 1013 are stored in a memory 1014 in order to generate the predicted signals 1012 for the subsequent video signals to be encoded 1003. There can be provided a configuration in which, before the decoded signals are written to the memory 1014, a deblocking filter is applied to the decoded signals, thereby carrying out processing of removing a block distortion, which is not illustrated. It should be noted that parameters for predicted signal generation 1015 determined by the prediction unit 1004 in order to obtain the predicted signals 1012 are sent to the variable-length encoding unit 1008, and are output as the bit stream 1009. On this occasion, the parameters for predicted signal generation 1015 include, for example, an intra prediction mode indicating how the spatial prediction is carried out in a frame, and motion vectors indicating the quantity of motion between frames. If the macroblock is formed of a unit of combined three color components, the parameters for predicted signal generation 1015 are detected as parameters commonly applied to the three color components, and if the macroblock is constructed as a rectangular block of a single color with the respective color components considered as independent pictures, the parameters for predicted signal generation 1015 are detected as parameters independently applied to the respective color components.

A video signal in the 4:4:4 format contains the same number of samples for the respective color components, and thus, in comparison with a video signal in the conventional 4:2:0 format, has faithful color reproducibility, whereas contains redundant information contents in terms of encoding. In order to increase the compression efficiency of the video signal in the 4:4:4 format, it is necessary to further reduce the redundancy contained in the signal compared to the fixed color space definition (Y, Cb, Cr) in the conventional 4:2:0 format. In the encoding in the 4:4:4 format described in Non-patent Document 2, the video signals to be encoded 1003 are encoded with the respective color components considered as luminance signals independently of statistical and local properties of the signals, and signal processing that maximally considers the properties of the signals to be encoded between the color components is not carried out in any of the prediction unit 1004, the compression unit 1006, and the variable-length encoding unit 1008.

It is therefore an object of the present invention to provide a method of efficiently compressing information by performing improved removal of signal correlations according to statistical and local properties of a video signal in a 4 : 4 : 4 format which is to be encoded, and, as described as the conventional technology, for encoding a motion video signal, such as a signal in a 4:4:4 format, which does not have a difference in sample ratio among color components, to provide an image encoding device, an image decoding device, an image encoding method, and an image decoding method, which are enhanced in optimality.

Means for Solving the Problem

According to the present invention, an image encoding device for dividing each picture of a digital video signal into predetermined unit regions, and carrying out, for each of the predetermined unit regions, compression encoding using a motion compensation prediction includes: a prediction unit for searching for a motion vector based on virtual-pixel-accuracy specification information for specifying an upper limit of an accuracy of a pixel position indicated by the motion vector, and generating, based on the motion vector that is searched for, a motion-compensation predicted image; and an encoding unit for multiplexing the virtual-pixel-accuracy specification information with a bit stream, and multiplexing, based on a magnitude of the motion vector that is searched for and a magnitude of a motion vector used for prediction of the motion vector that is searched for, motion vector data to be encoded with the bit stream.

Effects of the Invention

According to the image encoding device, the image decoding device, the image encoding method, and the image decoding method of the present invention, for encoding which uses various color spaces without limitation to a fixed color space such as the YCbCr color space, there can be provided a configuration in which local signal correlations present between respective color components are adaptively removed, and even when there are various definitions of the color space, optimal encoding processing can be carried out.

According to the image encoding device, the image decoding device, the image encoding method, and the image decoding method of the present invention, for encoding which uses various color spaces without limitation to a fixed color space such as the YCbCr color space, there can be provided a configuration in which the intra prediction mode information and the inter prediction mode information used between respective color components are flexibly selected, and even when there are various definitions of the color space, optimal encoding processing can be carried out.

Brief Description of the Drawings

[FIG. 1] An explanatory diagram illustrating a state of processing of generating virtual pixels at a 1/2-pixel precision (first embodiment).
[FIG. 2] An explanatory diagram illustrating a state of processing of generating a virtual pixel at a 1/4-pixel precision (first embodiment).
[FIG. 3] An explanatory diagram illustrating a configuration of an image encoding device according to the first embodiment (first embodiment).

[FIG. 4] A flowchart of adaptive motion vector search/encoding in the image encoding device in FIG. 3 (first embodiment).

[FIG. 5] An explanatory diagram illustrating division patterns (motion vector assignment patterns) in a macroblock in a motion compensation prediction mode evaluated by a prediction unit 4 in FIG. 3 (first embodiment).

[FIG. 6] An explanatory diagram illustrating a data arrangement of a bit stream output from the image encoding device according to the first embodiment (first embodiment).

[FIG. 7] An explanatory diagram illustrating a configuration of an image decoding device according to the first embodiment (first embodiment).

[FIG. 8] A flowchart of adaptive motion vector decoding in the image decoding device in FIG. 7 (first embodiment).

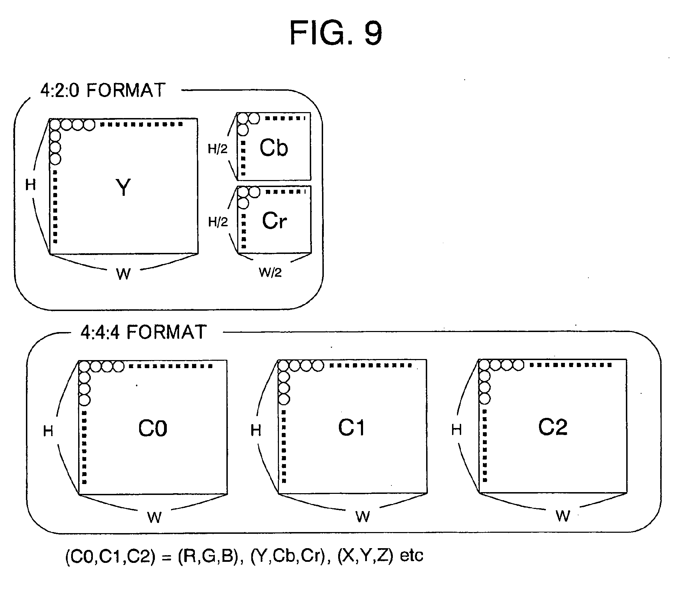

[FIG. 9] An explanatory diagram illustrating 4:2:0 and 4:4:4 formats.

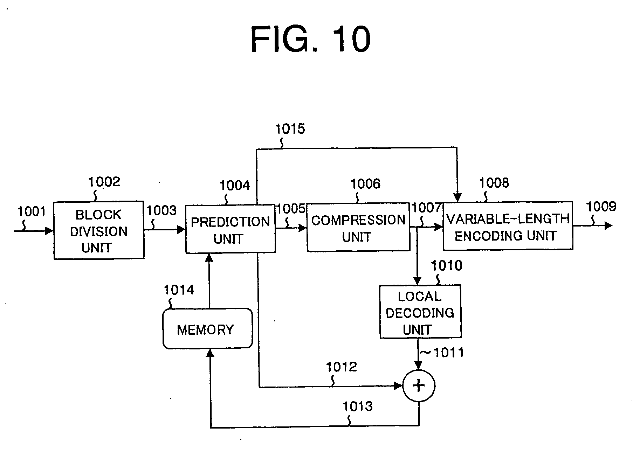

[FIG. 10] An explanatory diagram illustrating a configuration of a conventional image encoding device (Non-patent document 2).

Best Mode for carrying out the Invention

(First Embodiment)

According to this embodiment, a description is given of an image encoding device and an image decoding device which compress and decompress a digital video signal input in the 4:4:4 format, respectively, and dynamically switch a motion vector detection accuracy when motion compensation prediction processing is carried out.

The digital video signal is formed of discrete pixel information (referred to as integer pixels hereinafter) generated by sampling an original analog video signal, and a technology for producing a virtual sample (virtual pixel) between neighboring integer pixels by means of interpolation operation, and using the virtual pixel as a motion compensation prediction value is widely used. It is known that this technology provides two effects: an increase in prediction accuracy due to an increased number of candidate points of the prediction; and an increase in prediction efficiency due to a reduced number of singular points in a predicted image by a smoothing filter effect caused by the interpolation operation. On the other hand, when the accuracy of a virtual pixel increases, a dynamic range of a motion vector expressing a motion quantity increases as well, and thus, a code quantity generally increases. For example, when, without virtual pixels, only integer pixels are used, the unit of a value of a motion vector may be the integer pixel. However, when a position at a 1/2-pixel accuracy which exists between the integer pixels is specified by a motion vector, the unit of the value of the motion vector is the 1/2 pixel, resulting in a doubled dynamic rage necessary for representing the integer pixel.

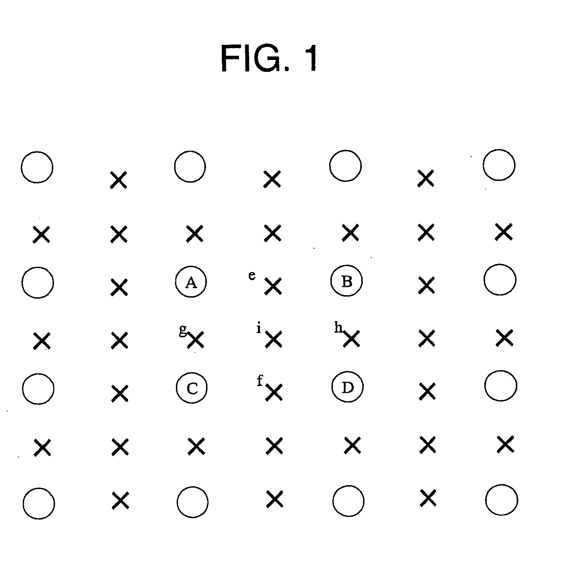

In the standard video encoding such as the MPEG-1 and MPEG-2, the half-pixel prediction permitting the accuracy of the virtual pixel up to the 1/2-pixel accuracy is employed. FIG. 1 illustrates a state in which the virtual pixel having the 1/2-pixel accuracy is generated. FIG. 1 illustrates integer pixels denoted by A, B, C, and D, and virtual pixels having the 1/2-pixel accuracy e, f, g, h, and i, which are generated from A to D.

$$e=(A+B)//2$$

$$f=(C+D)//2$$

$$g=(A+C)//2$$

$$h=(B+D)//2$$

$$i=(A+B+C+D)//4$$

(where // denotes a division with rounding.)

The virtual pixel having the 1/2-pixel accuracy is simply described as "half pixel" hereinafter for the sake of convenience.

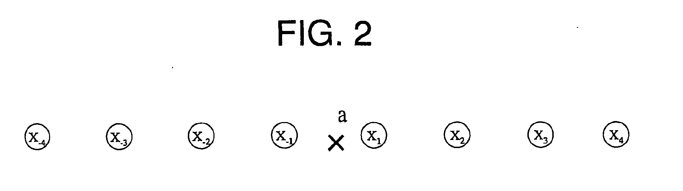

Further, in the MPEG-4 (ISO/IEC 14496-2) and MPEG-4 AVC/H.264 (ISO/IEC 14496-10), 1/4-pixel-accuracy prediction using virtual pixels having accuracy up to a 1/4-pixel accuracy is employed. In the 1/4-pixel-accuracy prediction, after half pixels are generated, virtual pixels having the 1/4-pixel accuracy are generated by using the half pixels. The virtual pixel having the 1/4-pixel accuracy is simply described as "1/4 pixel" hereinafter for the sake of convenience. For generating 1/4 pixels, first, half pixels serving as a basis thereof are generated, and on this occasion, in order to restrain excessive smoothing, a design employing a filter having a large number of taps is provided to maintain frequency components of an original integer pixel signal as much as possible. For example, in the generation of 1/4 pixels according to the MPEG-4, a half pixel a is generated by using eight-neighborhood integer pixels as follows. It should be noted that the following equation shows only horizontal processing, and a relationship between the half pixel a generated for generating a 1/4 pixel and X components $X_{-4}$ to $X_4$ of the integer pixels in the following equation is represented by a positional relationship illustrated in FIG. 2.

$$a=(COE_1*X_1+COE_2*X_2+COE_3*X_3+COE_4*X_4+COE_{-1}*X_{-1}+COE_{-2}*X_{-2}+COE_{-3}*X_{-3}+COE_{-4}*X_{-4})//256$$

(where $COE_k$: filter coefficient (sum of the coefficients is 256). // denotes a division with rounding).

According to AVC (ISO/IEC 14496-10), when a half pixel is generated, a filter having 6 taps realizing [1, -5, 20, 20, -5, 1] is employed, and, further, a 1/4 pixel is generated by linear interpolation processing as in the half pixel generation according to the MPEG-1 and MPEG-2. Further, there is an example in which a virtual sample having a 1/8-pixel accuracy which exists between 1/4 pixels may be obtained similarly and used.

1. Operation of Image Encoding Device

According to the first embodiment, virtual pixels used in motion compensation prediction processing may use the accuracies of the half pixel and 1/4 pixel. Then, the image encoding device and the image decoding device according to the first embodiment are configured so as to be able to flexibly specify, for the respective color components of a 4:4.:4 video signal, an upper limit of the usable accuracy of the virtual pixels according to states of the encoding/decoding.

As effects provided by this configuration, the following points can be listed.

(i) In the motion compensation prediction using virtual pixels, it is necessary to use the same reference image both on the side of the image encoding device and on the side of the image decoding device for generating virtual pixels. In general, in a compressed video signal, as the compression ratio becomes higher, the quality of a reference image used for the motion compensation prediction decreases. An effect of using virtual pixels having high accuracies becomes more significant as a reference image is closer to an original signal before the encoding and is thus high in quality (namely, low in compression ratio or high in bit rate of the encoding), and this corresponds to a case in which the increase in information content to transmitted after encoding of motion vectors can be compensated for by an improved efficiency of the prediction. However, when the compression ratio is high (when a low bit-rate encoding is used), and the quality of the reference image is considerably degraded from the original signal before the encoding, a case in which virtual pixels generated therefrom do not sufficiently ensure efficiency as predicted values of the original signal occurs, and, in this case, a balance between the prediction efficiency gained by the use of virtual pixels having high accuracies and the increased quantity of encodes of motion vectors degrades. Thus, the image encoding device and the image decoding device can be conveniently designed so that the accuracy of a virtual pixel which a motion vector can specify can be flexibly changed according to states of the encoding.

(ii) In the encoding and decoding of the 4:4:4 video signal, video signals based on not only the conventional color space formed of the luminance component and the color difference components, but also various color spaces such as the RGB are handled, and hence statistical properties of the signal fluctuate in various ways for the respective color components. The conventional motion compensation prediction using virtual pixels according to the MPEG standard encoding is optimized mainly for the luminance signal, and, for the color components different in statistical properties from the luminance signal, the conventional method does not necessarily provide an optimal efficiency of the motion compensation prediction. Thus, the image encoding device and the image decoding device can be conveniently designed so that the accuracy of the virtual pixel which a motion vector can specify can be flexibly changed according to properties of signals treated by the encoding and decoding.

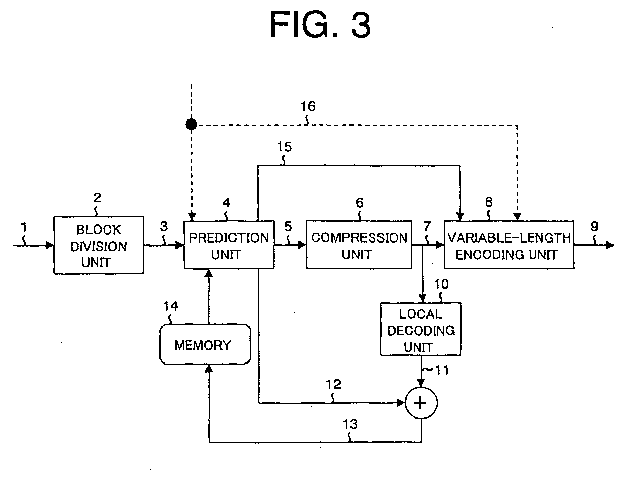

According to the first embodiment, especially, an example in which a magnitude of a motion vector representing a magnitude of a motion between a frame to be encoded and a reference image is focused, and the accuracy of virtual pixels is adaptively changed is described. FIG. 3 illustrates a configuration of the image encoding device according to the first embodiment. The operations of components other than a prediction unit 4 and a variable-length encoding unit 8 follow an encoding operation described in Non-patent Document 2 described in Background Art.

The prediction unit 4 according to the first embodiment is characterized in receiving virtual-pixel-accuracy indication information 16, and, based on the virtual-pixel-accuracy indication information 16, determines the accuracy of virtual pixels used for detecting motion vectors between frames, thereby carrying out processing. The virtual-pixel-accuracy indication information 16 is defined as a value determining a relationship between a magnitude of a motion vector and the virtual pixel accuracy. In other words, an upper limit of motion vectors using virtual pixels up to the 1/4-pixel accuracy and an upper limit of motion vectors using virtual pixels up to the half -pixel accuracy are specified. There is provided a configuration in which a motion vector having a magnitude exceeding the upper limit of the magnitude of the motion vectors using virtual pixels up to the half-pixel accuracy uses only integer pixels. This configuration provides the following effects.

A motion vector is a quantity representing a degree of a motion in each block between neighboring frames, and, when the magnitude is small, the block to be predicted has not moved so largely from a corresponding block on a reference image. In other words, it can be considered that the block area is in a state close to a stationary state. On the other hand, when the magnitude of a motion vector is large, the block to be predicted has moved largely from the corresponding block on the reference image. In other words, it can be considered that this block area is an area presenting a large temporal change in motion between neighboring frames (for example, an object to be imaged presenting a hard motion). In general, in a stationary area, the resolution of a video is high and in an area presenting a hard motion, the resolution tends to decrease. While, in an area high in resolution, virtual pixels can be generated at a high accuracy, in an area low in resolution, a correlation between neighboring pixels decreases, and the significance of generating a virtual pixel high in resolution thus decreases. Therefore, by using the virtual-pixel-accuracy indication information 16 according to the first embodiment, an effect can be expected that, in an area which has a motion vector small in magnitude and is thus nearly stationary, virtual pixels are generated up to a high accuracy, and are then used for the prediction, thereby increasing the prediction accuracy, and, conversely, in an area having a motion vector large in magnitude, thus presenting a hard motion, the upper limit of the accuracy of virtual pixels is decreased, thereby reducing code quantity accordingly.

In the following section, detailed descriptions are given of adaptive encoding processing of a motion vector for the following cases, respectively: a case in which a macroblock is formed of a unit of combined three color components, and a common motion vector is applied; and a case in which, the respective color components are considered as independent pictures, a macroblock is constructed as a rectangular block of a single color component, and an individual motion vector is applied to each color component.

(A) Case in which a common motion vector is used for the three color components

When a block division unit 2 outputs a macroblock formed of the three color components, and the encoding/ decoding is carried out in a mode in which a common motion vector is used for the three color components, the virtual-pixel-accuracy indication information 16 specifies a prescription that, for a motion vector mv common to the three color components, when the magnitude is smaller than a value Lq, virtual pixels are used up to the 1/4-pixel accuracy, when the magnitude is equal to or more than the value Lq and less than a value Lh, virtual pixels are used up to the half-pixel accuracy, and when the magnitude is larger than the value Lh, only integer pixels are used for the motion compensation prediction. According to this prescription, a motion vector mv' to be encoded can be encoded while the dynamic range is adaptively reduced as follows (the following equation is for a case in which mv>0 holds, and for a case in which mv<0 holds, the sign is inverted).

$$\mathtt{mv'=mv \ (mv<Lq) \ (1a)}$$

→ 1/4-pixel accuracy can be used

$$\mathtt{mv'=Lq+(mv \ Lq+1)/2 \ (Lq<=mv<Lh) \ (2a)}$$

→ half-pixel accuracy can be used

$$mv'=Lq+(Lh\ Lq+1)/2+(mv\ Lh+2)/4\ (Lh<=mv)\ (3a)$$

$\rightarrow$ only integer-pixel accuracy can be used

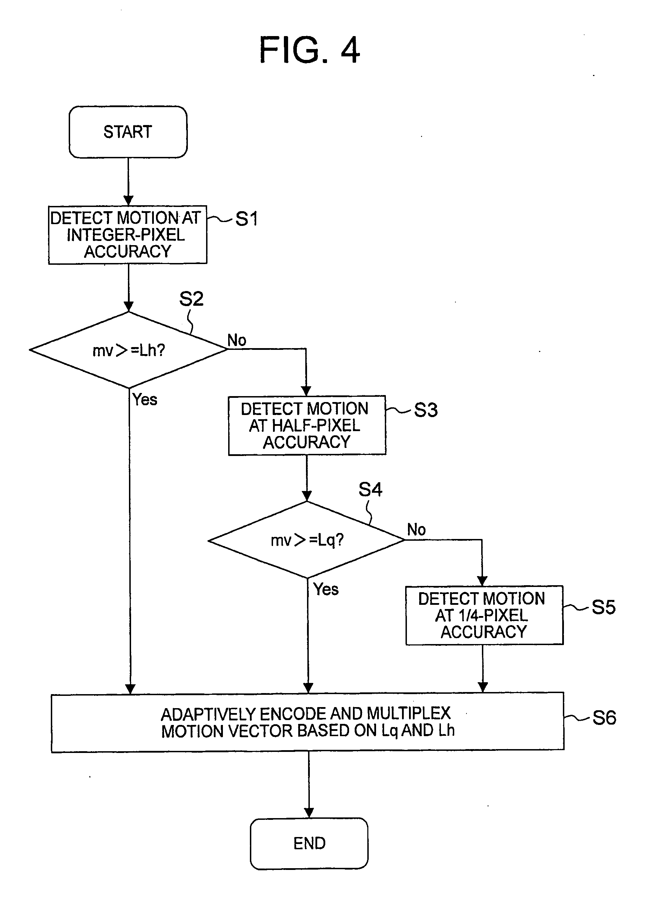

A processing flow by the prediction unit 4 and the variable-length encoding unit 8 is illustrated in FIG. 4. The prediction unit 4 first carries out a motion vector search using only integer pixels (Step S1), and determines which one of the equations (1a) to (3a) the motion vector satisfies. When the motion vector satisfies the equation (3a) ("Yes" in Step S2), the prediction unit 4, without carrying out subsequent motion vector searches using virtual pixels at the half-pixel and 1/4-pixel accuracies, finishes the prediction processing, and outputs mv as a part of parameters for prediction signal generation 15. When the motion vector does not satisfy the equation (3a) ("No" in Step S2), the prediction unit 4 further carries out the motion vector search at the half-pixel accuracy in the range less than Lh (Step S3), and determines whether the motion vector satisfies the equation (2a) (Step S4). When the motion vector satisfies the equation (2a) ("Yes" in Step S4), the prediction unit 4 outputs mv as a part of the parameters for prediction signal generation 15. When the motion vector does not satisfy the equation (2a), the motion vector satisfies the equation (1a) ("No" in Step S4), the prediction unit 4 further carries out the motion vector search also using 1/4 pixels in the range less than Lq (Step S5), and outputs mv as a part of the parameters for prediction signal generation 15. The variable-length encoding unit 8 efficiently encodes the motion vector by using mv input as a part of the parameters for prediction signal generation 15, and Lq and Lh specified by the virtual-pixel-accuracy indication information 16, based on the encoding expression of the motion vector according to the equations (1a) to (3a) (Step S6). In general, mv is not directly encoded, but a motion vector in a neighboring block is used as a predicted value, and a prediction difference is encoded. In this case, there may be provided a conf iguration in which the neighboring block serving as the predicted value is always held as a value of the maximum virtual pixel accuracy, and only when a prediction difference is obtained, the value is converted, similarly to mv, according to the equations (1a) to (3a) for obtaining the difference. The motion vector needs to be decoded by a method according to the equations (1a) to (3a) on the side of the image decoding device, and thus, the virtual-pixel-accuracy indication information 16 is output by being multiplexed with the bit stream 9 (Step S6).

(B) Case in which an individual motion vector is used for the respective color components

When the block division unit 2 outputs a macroblock formed of a single color component, and the encoding/decoding is carried out in a mode in which an individual motion vector is used for the three color components, the virtual-pixel-accuracy indication information 16 specifies a prescription that, for a motion vector $mv_k$ (k=0,1,2) of each of the three color components, when the magnitude is smaller than a value $Lq^k$, virtual pixels are used up to the 1/4-pixel , accuracy, when the magnitude is equal to or more than the value $Lq^k$ and less than a value $Lh^k$, virtual pixels are used up to the half-pixel accuracy, and when the magnitude is larger than the value $Lh^k$, only integer pixels are used for the motion compensation prediction. According to this prescription, a motion vector $mv_k'$ to be encoded can be encoded while the dynamic range is adaptively reduced as follows (the following equation is for a case in which $mv_k<0$ holds, and for a case in which $mv_k<0$ holds, the sign is inverted).

$$mv_k'=mv_k\ (mv_k<Lq^k)\ (1b)$$

$\rightarrow$ 1/4-pixel accuracy can be used

$$mv_k'=Lq^k+(mv_k\ Lq^k+1)/2\ (Lq^k<=mv_k<Lh^k)\ (2b)$$

$\rightarrow$ half-pixel accuracy can be used

$$mv_k'=Lq^k+(Lh^k\ Lq^k+1)/2+(mv_k\ Lh^k+2)/4\ (Lh^k<=mv_k)\ (3b)$$

$\rightarrow$ only integer-pixel accuracy can be used

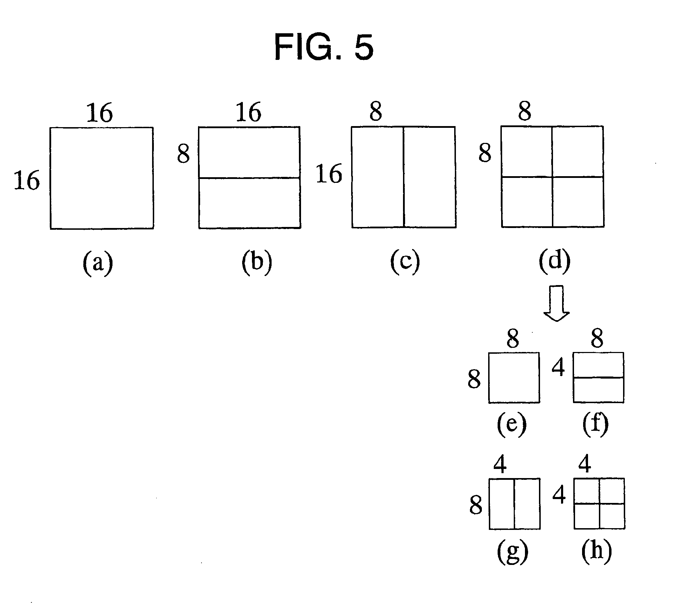

A processing flow by the prediction unit 4 and the variable-length encoding unit 8 is illustrated in FIG. 5. The prediction unit 4 first carries out a motion vector search using only integer pixels, and determines which one of the equations (1b) to (3b) the motion vector satisfies. When the motion vector satisfies the equation (3b), the prediction unit 4, without carrying out subsequent motion vector searches using virtual pixels at the half-pixel and 1/4-pixel accuracies, finishes the prediction processing, and outputs $mv_k$ as a part of the parameters for prediction signal generation 15. When the motion vector does not satisfy the equation (3b), the prediction unit 4 further carries out the motion vector search at the half-pixel accuracy in the range less than $Lh^k$, and determines whether the motion vector satisfies the equation (2b). When the motion vector satisfies the equation (2b), the prediction unit 4 outputs $mv_k$ as a part of the parameters for prediction signal generation 15. When the motion vector does not satisfy the equation (2b), the motion vector satisfies the equation (1b), the prediction unit 4 further carries out the motion vector search also using 1/4 pixels in the range less than $Lq^k$, and outputs $mv_k$ as a part of the parameters for prediction signal generation 15. The variable-length encoding unit 8 efficiently encodes the motion vector by using $mv_k$ input as a part of the parameters for prediction signal generation 15, and $Lq^k$ and, $Lh^k$ specified by the virtual-pixel-accuracy indication information 16, based on the encoding expression of the motion vector according to the equations (1b) to (3b). In general, the motion vector $mv_k$ is not directly encoded, but a motion vector in a neighboring block is used as a predicted value, and a prediction difference is encoded. In this case, there may be provided a configuration in which the neighboring block serving as the predicted value is always held as a value of the maximum virtual pixel accuracy, and only when a prediction difference is obtained, the value is converted, similarly to $mv_k$, according to the equations (1b) to (3b) for obtaining the difference. The motion vector needs to be decoded by a method according to the equations (1b) to (3b) on the side of the image decoding device, and thus, for the virtual-pixel-accuracy indication information 16, the values corresponding to the three color components are output by being multiplexed with the bit stream 9.

Moreover, the processing flow thereof is equivalent to that of FIG. 4 when replacing mv of FIG. 4 by $mv_k$, and replacing Lq and Lh by $Lq^k$ and $Lh^k$.

It is considered that effects of the virtual pixels change according to various factors such as a status of a video signal (stationary video, video representing a hard motion, large motion in the horizontal direction, or large motion in the vertical direction), an encoding bit rate (quantization step size), a video resolution (horizontal pixel number and vertical line number of the frame). Therefore, Lq and Lh specified by the virtual-pixel-accuracy indication information 16 are preferably defined as parameters adaptively changing according to these factors in the sequence, or structured so that different values are individually multiplexed for each picture. For example, when a video contains hard motions in its entirety, and the quantization step size is large, the quality of the reference image is low due to the low bit rate, and also, a ratio of the code quantity of the motion vector increases. Hence, by setting Lq and Lh to large values , the code quantity of the motion vector can be reduced without sacrificing the prediction efficiency. Conversely, when a relatively stationary video is encoded at high bit rate, the effect of the motion compensation prediction using virtual pixels increases, and the code quantity of the motion vector relatively decreases. Hence, there may be provided a configuration in which virtual pixels are easy to use by setting Lq and Lh to small values or inactivating them. The properties of the video and the bit rate (quantization step size) may be combined, or may individually be used as control factors of Lq and Lh.

Moreover, when the resolution of an image increases, a real-world area captured by the block serving as the unit of the motion vector search generally decreases, and hence the search range of the motion vector needs to be increased. By controlling Lq and Lh accordingly, efficient encoding is enabled. As described in Non-patent Documents 1 and 2, when a predicted image is selectively obtained from among a plurality of reference images different in temporal distance, Lq and Lh may be controlled according to an index of a reference image to be used.

Moreover, there may be provided a configuration in which the virtual-pixel-accuracy indication information 16 may be structured to be associated with the size of the block serving as the unit of the motion vector search to be used. In Non-patent Documents 1 and 2, as the block serving as the unit of the motion vector search, blocks having a plurality of sizes as illustrated in FIG. 5 may be used. When the size of the block to which the motion vector is assigned is large, even if the magnitude of the motion vector itself is large, a pattern in an image can be efficiently captured, but when the size of the block is small, the search is influenced by noise more easily than the pattern of the image. Therefore, there may be provided a configuration in which, when the block size of the block to which the motion vector is assigned is large, Lq and Lh are decreased or inactivated, thereby increasing the frequency of the motion compensation prediction at the 1/4-pixel accuracy, and when the block size is small, Lq and Lh are increased or activated.

Moreover, when individual motion vectors are used for the respective color components, the virtual-pixel-accuracy indication information 16 may be structured so as to independently control $Lq^k$ and $Lh^k$ for the respective color components (k). For example, when the encoding is carried out in a color space such as that of Y, Cb, and Cr, properties of the signals of the respective color components are different from on another, and thus, it is considered that the effects of $Lq^k$ and $Lh^k$ of the respective color components are different from one another.

Further, the virtual-pixel-accuracy indication information 16 in the above-mentioned example is set only for the half pixels and 1/4 pixels, but even when finer virtual pixels such as 1/8 pixels or 1/16 pixels are used, by setting new upper limit values similar to Lq and Lh, the virtual-pixel-accuracy indication information 16 can be easily extended.

2. Configuration of Encoded Bit Stream

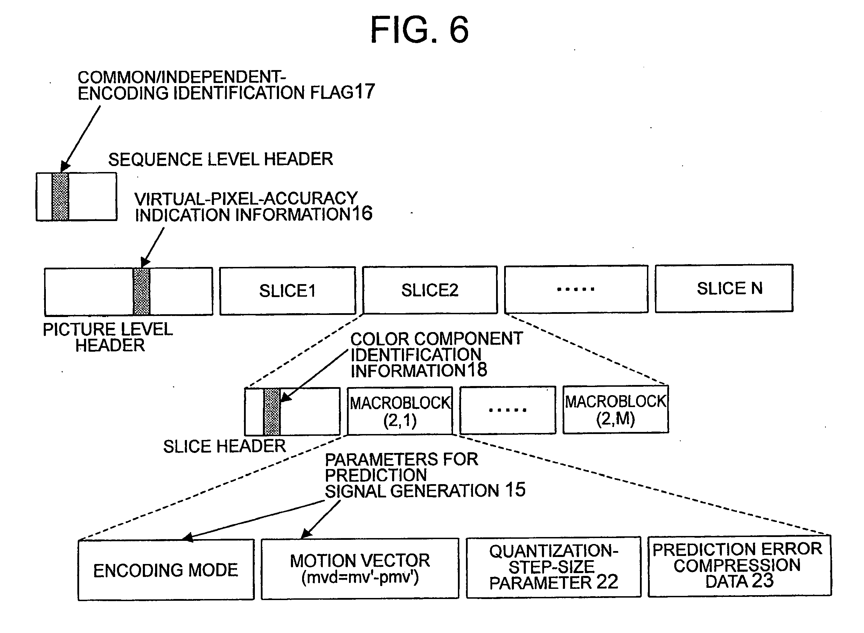

An input video signal 1 is encoded based on the above-mentioned processing by the image encoding device of FIG. 3, and is output as a bit stream 9 per slice, which is formed by binding a plurality of macroblocks, from the image encoding device. FIG. 6 illustrates a data arrangement of the bit stream 9. The bit stream 9 is structured by assembling encoded data corresponding to the number of macroblocks contained in a picture, and a plurality of assembled macroblocks are unitized into a data unit referred to as a slice. A picture level header which is referred to as a common parameter by the macroblocks belonging to the same picture is provided, and, in the picture level header, the virtual-pixel-accuracy indication information 16 is stored. When a common/independent-encoding identification flag 17 multiplexed with the sequence level header indicates that a motion vector common to the three color components is used, one set of Lq and Lh is multiplexed, and when the common/independent-encoding identification flag 17 indicates that individual motion vectors are used for the respective color components, three (as many as the number of the color components) sets of $Lq^k$ and $Lh^k$ are multiplexed.

Each slice begins with each slice header, and then, pieces of encoded data of respective macroblocks in the slice are arranged (this example indicates that M macroblocks are contained in the second slice). When the common/independent-encoding identification flag 17 indicates that individual motion vectors are used for the respective color components, the slice header contains color component identification information 18 indicating encoded data of which color component is contained in the same slice. On this occasion, the virtual-pixel-accuracy indication information 16 may be structured so as to multiplex $Lq^k$ and $Lh^k$ identified by the color component identification information 18 with the slice header. Following the slice header, in the data of each macroblock, an encoding mode, a motion vector, a quantization-step-size parameter, prediction error compression data, and the like are arranged. As for the motion vector, mvdwhich is a difference between mv' defined by the equations (1a) to (3a) (or equations (1b) to (3b)) and a predicted value pmv' similarly converted by the same method is encoded.

It should be noted that the virtual-pixel-accuracy indication information 16 may be structured to be stored in the sequence level header which is added per sequence formed by binding a plurality of video frames, and, based on each encoded data such as the picture, the slice, and the macroblock, the information multiplexed with the sequence level header may be adaptively changed, thereby defining Lq and Lh. Accordingly, it is no longer necessary to encode and transmit the virtual-pixel-accuracy indication information 16 in each picture level header, resulting in a reduced information quantity of the header.

3. Operation of Image Decoding Device

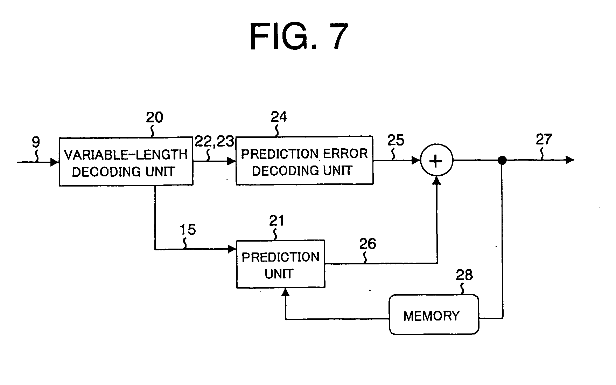

FIG. 7 illustrates a configuration of the image decoding device according to the first embodiment. A variable-length decoding unit 20 decodes the bit stream 9 illustrated in FIG. 6, by extracting and interpreting the common/independent-encoding identification flag 17, determines whether the macroblock is structured by the three color components or a single color component, and further analyzes the bit stream of subsequent slices and macroblocks. Based on a decodedvalue of the common/independent-encoding identification flag 17, the virtual-pixel-accuracy indication information 16 is extracted from the bit stream 9. Then, according to a predetermined rule (syntax), the slice header, and prediction error compression data 22, the parameters for prediction signal generation 15 containing the encoding mode and the motion vector, a quantization-step-size parameter 23, and the like of each macroblock are extracted.

The prediction error compression data 22 and the quantization-step-size parameter 23 are input to a prediction error decoding unit 24, and are restored as a decoded prediction error signal 25. A prediction unit 21 generates, from the parameters for prediction signal generation 15 decoded by the variable-length decoding unit 20 and from a reference image in a memory 28, a predicted image 26 (which does not include the operation of detecting a motion vector in the prediction unit 4 of the image encoding device). The decoded prediction error signal 25 and the predicted image 26 are added to each other by an adder, and a decoded signal 27 is obtained. The decoded signal 27 is used for the motion compensation prediction for subsequent macroblocks, and thus, is stored in the memory 28. There may be provided a configuration in which, before the decoded signal is written to the memory 28, a deblocking filter is applied to the decoded signal, thereby carrying out processing of removing a block distortion, which is not illustrated. The decoded signal 27 is restored, according to the common/independent-encoding identification flag 17, as an image signal of any one of a macroblock containing the three color components and a macroblock containing only a single color component.

In the image decoding device according to the first embodiment, it is assumed that the maximum accuracy of a virtual pixel indicated by a motion vector is a 1/4 pixel, and the motion vector output from the variable-length decoding unit 20 as a part of the parameters for prediction signal generation 15 is always output to the prediction unit 21 while a value thereof is set such that the 1/4 pixel is represented as 1. In other words, it is assumed that a motion vector which is encoded in the image encoding device while the dynamic range thereof is compressed according to the equations (1a) to (3a) (or the equations (1b) to (3b)) is converted by the inverse conversion of the processing at the time of the encoding using the virtual-pixel-accuracy indication information 16 extracted from the bit stream, mvd extracted from the bit stream per block to which the motion vector is assigned, and the predicted value pmv' of the motion vector, the dynamic range thereof is restored, and the motion vector is output to the prediction unit 21.

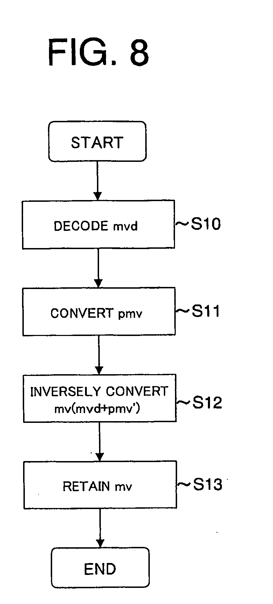

A processing flow of this inverse conversion is illustrated in FIG. 8. The variable-length decoding unit 20 first extracts mvd, which is the encoded data of the motion vector, from the bit stream (Step S10). This corresponds to the encoded data obtained by compressing the dynamic range thereof according to the equations (1) to (3) at the time of the encoding. Then, pmv, which serves as the predicted value of the motion vector, is obtained, and is converted according to the equations (1a) to (3a) (or the equations (1b) to (3b)) as in the encoding using the virtual-pixel-accuracy indication information 16, thereby compressing the dynamic range thereof (Step S11). From pmv' thus obtained, mv' =mvd+pmv' is obtained, and mv' is converted inversely according to the following equations (4) to (6) using the virtual-pixel-accuracy indication information 16, thereby restoring the dynamic range (Step S12).
$$mv''=mv' \quad (mv<Lq) \quad (4)$$

$$mv''=(mv' \quad Lq) \times 2+Lq \quad (Lq<=mv<(Lq+(Lh-Lq)/2)) \quad (5)$$

$$mv''=(mv' \quad Lq \quad (Lh-Lq)/2) \times 4+Lh \quad ((Lq+(Lh-Lq)/2)<=mv) \quad (6)$$

This mv" is output to the prediction unit 21, and, as a predicted value for the subsequent motion vector decoding, is internally retained (Step S13). As a result of the above-mentioned processing, the prediction unit 21 can always handle the motion vector in the unit which represents the 1/4 pixel as 1 without necessity of considering the dynamic range of the encoded motion vector.

As described along with the effects in Operation of Image Encoding Device, when the virtual-pixel-accuracy indication information 16 uses a common motion vector for the three color components (= when a macroblock contains the signals of the three color components), Lq and Lh are used as the values common to the three color components. When individual motion vectors are used for the respective color components (= when a macroblock contains only a single color component), the virtual-pixel-accuracy indication information 16 may be structured such that $Lq^k$ and $Lh^k$ decoded for the respective color components (k) are used to apply the equations (4) to (6) independently to the respective color components, or the same values are used as $Lq^k$ and $Lh^k$ for all the color components, and common Lq and Lh are used. As a result, this structure can provide efficient motion prediction adapted to statistical properties of the signals variously changing depending on the color space.

Moreover, as described along with the effects in Operation of Image Encoding Device, Lq and Lh may be structured so as to change in association with the encoding information contained in the bit stream 9, such as the frame resolution of the video to be decoded, the quantization-step-size parameter 23, the size of the block to which the motion vector is assigned (this is specified by the encoding mode), and the index of the reference image. The image decoding device configured in this way can adapt to the decoding of an efficiently encoded bit stream.

With the image encoding device and the image decoding device according to the first embodiment described above, in order to efficiently encode the color video signal in the 4:4:4 format, the accuracy of the virtual samples used for the motion vector detection and the predicted image generation can be dynamically switched according to the properties of the signals of the respective color components. Accordingly, the image encoding device and the image decoding device, which can carry out encoding while the code quantity of a motion vector is efficiently restrained in a low bit rate encoding presenting a high compression ratio, can be provided.

Further, the image encoding device and the image decoding device according to the first embodiment provide, for the following reason, an effect of reducing complexity of the image encoding processing/decoding processing. In General, as the resolution of a video increases and the number of pixels in a screen increases, when the quantity of a movement of an object to be imaged is calculated in terms of the number of pixels, the number of pixels involved in the movement increases compared with a case of a low resolution, and it is thus necessary to set a wide range for searching for the motion vector. As a result of the wide range for searching for the motion vector, the number of evaluated points increases and the quantity of arithmetic operation for the evaluation increases on the image encoding device side, but the image encoding device according to the first embodiment is configured to cancel the search for a virtual pixel when the magnitude of the motion vector is equal to or more than Lh at the time of the integer pixel search, and thus, the quantity of arithmetic operation can be restrained. Moreover, in order to generate a virtual pixel, it is necessary to carry out interpolation filtering processing using a plurality of integer pixels around a target point of the virtual pixel generation on the reference image. In general, the reference image is a frame memory having a large data size, and thus is stored in an external large-capacity memory (memories 14 and 28) such as a DRAM. In order to carry out the interpolation filtering processing at high speed, the image encoding device is generally implemented and configured such that a part of the reference image on the external memory is fetched into an internal cache each time to carry out the arithmetic operations. As a result, for the processing of the virtual pixel generation, access to an external memory is generally inevitable, and as the number of points for the virtual pixel generation increases, the memory bandwidth increases, leading to an increase in power consumption. When a range indicated by motion vectors is narrow, the number of times access is made to the external memory can be reduced by fetching required data at once from the reference image into the internal cache within the range of the capacity of the internal cache. However, when the magnitude of the motion vector is large, it is generally difficult to fetch image data in a region containing it into the internal cache, and the memory bandwidth inevitably increases. In the image encoding device and the image decoding device according to the first embodiment, only when the magnitude of the motion vector is smaller than a certain threshold, the virtual pixel generation processing is carried out, and the first embodiment provides effects of restraining the memory bandwidth required for the interpolation filtering processing and the power consumption.

According to the first embodiment, the example of the encoding/decoding of the 4:4:4 video signal is described, but it is apparent that the adaptive encoding of the motion vector according to the present invention can be applied so as to achieve higher efficiency of the motion vector encoding in the video encoding intended for the 4:2:0 and 4:2:2 formats which are obtained by subsampling in color in the conventional luminance/color difference component format as in Non-patent Document 1.

## Claims

1.  An image encoding device for dividing each picture of a digital video signal into predetermined unit regions, and carrying out, for each of the predetermined unit regions, compression encoding using a motion compensation prediction, the image encoding device comprising:

    a prediction unit for searching for a motion vector based on virtual-pixel-accuracy specification information for specifying an upper limit of an accuracy of a pixel position indicated by the motion vector, and generating, based on the motion vector that is searched for, a motion-compensation predicted image; and
    an encoding unit for multiplexing the virtual-pixel-accuracy specification information with a bit stream, and multiplexing, based on a magnitude of the motion vector that is searched for and a magnitude of a motion vector used for prediction of the motion vector that is searched for, motion vector data to be encoded with the bit stream.

2.  An image decoding device for receiving an image-encoded bit stream obtained by dividing each picture of a digital video signal into predetermined unit regions and carrying out, for each of the predetermined unit regions, compression encoding using a motion compensation prediction, and restoring the digital video signal, the image decoding device comprising:

    a decoding unit for restoring a motion vector by extracting virtual-pixel-accuracy specification information for specifying an upper limit of an accuracy of a pixel position indicated by the motion vector from the image-encoded bit stream, and by extracting, for each region to which the motion vector is assigned, encoded data of the motion vector from the image-encoded bit stream; and
    a prediction unit for generating, based on the motion vector decoded by the decoding unit, a motion-compensation predicted image,
    wherein the decoding unit decodes the motion vector based on a magnitude of data restored from the encoded data of the motion vector extracted from the image-encoded bit stream and a motion vector used for prediction of the motion vector to be decoded, and the virtual-pixel-accuracy specification information extracted from the image-encoded bit stream.

3.  An image encoding method of dividing each picture of a digital video signal into predetermined unit regions, and carrying out, for each of the predetermined unit regions, compression encoding using a motion compensation prediction, the image encoding method comprising:

    a prediction step of searching for a motion vector based on virtual-pixel-accuracy specification information for specifying an upper limit of an accuracy of a pixel position indicated by the motion vector, and generating, based on the motion vector that is searched for, a motion-compensation predicted image; and

an encoding step of multiplexing the virtual-pixel-accuracy specification information with a bit stream, and multiplexing, based on a magnitude of the motion vector that is searched for and a magnitude of a motion vector used for prediction of the motion vector that is searched for, motion vector data to be encoded with the bit stream.

4. An image decoding method of receiving an image-encoded bit stream obtained by dividing each picture of a digital video signal into predetermined unit regions and carrying out, for each of the predetermined unit regions, compression encoding using a motion compensation prediction, and restoring the digital video signal, the image decoding method comprising:

a decoding step of restoring a motion vector by extracting virtual-pixel-accuracy specification information for specifying an upper limit of an accuracy of a pixel position indicated by the motion vector from the image-encoded bit stream, and by extracting, for each region to which the motion vector is assigned, encoded data of the motion vector from the image-encoded bit stream; and
a prediction step of generating, based on the decoded motion vector, a motion-compensation predicted image, wherein the decoding step comprises decoding the motion vector based on a magnitude of data restored from the encoded data of the motion vector extracted from the image-encoded bit stream and a motion vector used for prediction of the motion vector to be decoded, and the virtual-pixel-accuracy specification information extracted from the image-encoded bit stream.

# FIG. 1

# FIG. 2

$$\overset{\times}{x_{-4}} \qquad \overset{\times}{x_{-3}} \qquad \overset{\times}{x_{-2}} \qquad \overset{\times}{x_{-1}} \quad \overset{a}{\times} \quad \overset{\times}{x_{1}} \qquad \overset{\times}{x_{2}} \qquad \overset{\times}{x_{3}} \qquad \overset{\times}{x_{4}}$$

# FIG. 3

# FIG. 4

```
                    ┌─────────────┐
                    │    START    │
                    └──────┬──────┘
                           │
                           ▼
              ┌────────────────────────┐
              │ DETECT MOTION AT        │──S1
              │ INTEGER-PIXEL           │
              │ ACCURACY                │
              └────────────┬───────────┘
                           │      S2
                           ▼
                       ╱───────╲          No
                     ╱ mv>=Lh?   ╲──────────────┐
                     ╲           ╱               │
                       ╲───────╱                 ▼
                           │Yes      ┌────────────────────┐
                           │         │ DETECT MOTION       │──S3
                           │         │ AT HALF-PIXEL       │
                           │         │ ACCURACY            │
                           │         └──────────┬─────────┘
                           │                    │      S4
                           │                    ▼
                           │                ╱───────╲        No
                           │              ╱ mv>=Lq?   ╲──────────┐
                           │              ╲           ╱          │
                           │                ╲───────╱            ▼
                           │                    │Yes   ┌──────────────────┐
                           │                    │      │ DETECT MOTION     │──S5
                           │                    │      │ AT 1/4-PIXEL      │
                           │                    │      │ ACCURACY          │
                           │                    │      └─────────┬────────┘
                           ▼                    ▼                ▼
              ┌───────────────────────────────────────────────────┐
              │ ADAPTIVELY ENCODE AND MULTIPLEX                     │──S6
              │ MOTION VECTOR BASED ON Lq AND Lh                    │
              └────────────────────────┬──────────────────────────┘
                                       │
                                       ▼
                                ┌─────────────┐
                                │     END     │
                                └─────────────┘
```

# FIG. 5

(a)  (b)  (c)  (d)

(e)  (f)

(g)  (h)

# FIG. 6

COMMON/INDEPENDENT-
ENCODING IDENTIFICATION FLAG17

SEQUENCE LEVEL HEADER

VIRTUAL-PIXEL-ACCURACY
INDICATION INFORMATION16

| PICTURE LEVEL HEADER | SLICE1 | SLICE2 | · · · · · | SLICE N |

COLOR COMPONENT
IDENTIFICATION
INFORMATION18

| SLICE HEADER | MACROBLOCK (2,1) | · · · · · | MACROBLOCK (2,M) |

PARAMETERS FOR
PREDICTION
SIGNAL GENERATION 15

| ENCODING MODE | MOTION VECTOR (mvd=mv'-pmv') | QUANTIZATION-STEP-SIZE PARAMETER 22 | PREDICTION ERROR COMPRESSION DATA 23 |

EP 2 234 404 A1

# FIG. 7

# FIG. 8

```
        ┌─────────────┐
        │    START    │
        └─────────────┘
               │
               ▼
        ┌─────────────┐
        │ DECODE mvd  │──S10
        └─────────────┘
               │
               ▼
        ┌─────────────┐
        │ CONVERT pmv │──S11
        └─────────────┘
               │
               ▼
        ┌──────────────────┐
        │ INVERSELY CONVERT│──S12
        │  mv(mvd+pmv')    │
        └──────────────────┘
               │
               ▼
        ┌─────────────┐
        │  RETAIN mv  │──S13
        └─────────────┘
               │
               ▼
        ┌─────────────┐
        │     END     │
        └─────────────┘
```

# FIG. 9

4:2:0 FORMAT

Y H W

Cb H/2 W/2

Cr H/2

4:4:4 FORMAT

C0 H W

C1 H W

C2 H W

(C0,C1,C2) = (R,G,B), (Y,Cb,Cr), (X,Y,Z) etc

# FIG. 10

## INTERNATIONAL SEARCH REPORT

| International application No. |
|---|
| PCT/JP2009/050142 |

A. CLASSIFICATION OF SUBJECT MATTER
*H04N7/32*(2006.01)i

According to International Patent Classification (IPC) or to both national classification and IPC

B. FIELDS SEARCHED

Minimum documentation searched (classification system followed by classification symbols)
H04N7/24-7/68

Documentation searched other than minimum documentation to the extent that such documents are included in the fields searched
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2004-236049 A (Hitachi, Ltd.), 19 August, 2004 (19.08.04), Par. Nos. [0029] to [0032] (Family: none) | 1-4 |
| A | JP 8-251596 A (Toshiba Corp.), 27 September, 1996 (27.09.96), Full text; all drawings & US 5731840 A & EP 731614 A2 | 1-4 |

☐ Further documents are listed in the continuation of Box C.   ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 02 April, 2009 (02.04.09) | 21 April, 2009 (21.04.09) |

| Name and mailing address of the ISA/ | Authorized officer |
|---|---|
| Japanese Patent Office | |
| Facsimile No. | Telephone No. |

Form PCT/ISA/210 (second sheet) (April 2007)